(19) Europäisches Patentamt
European Patent Office
Office européen des brevets

(11) **EP 2 584 320 B1**

(12) **EUROPÄISCHE PATENTSCHRIFT**

(45) Veröffentlichungstag und Bekanntmachung des Hinweises auf die Patenterteilung:
**02.07.2014   Patentblatt 2014/27**

(51) Int Cl.:
***G01F 1/32*** *(2006.01)*

(21) Anmeldenummer: **12006169.2**

(22) Anmeldetag: **30.08.2012**

(54) **Verfahren zum Betrieb eines Vortexdurchflussmessgeräts**

Method for operating a vortex flow meter

Procédé destiné au fonctionnement d'un débitmètre à vortex

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.10.2011   DE 102011116282**

(43) Veröffentlichungstag der Anmeldung:
**24.04.2013   Patentblatt 2013/17**

(73) Patentinhaber: **KROHNE Messtechnik GmbH 47058 Duisburg (DE)**

(72) Erfinder: **Gossner, Kai
47506 Neukirchen-Vluyn (DE)**

(74) Vertreter: **Gesthuysen Patent- und Rechtsanwälte Patentanwälte
Postfach 10 13 54
45013 Essen (DE)**

(56) Entgegenhaltungen:
**CA-A- 892 698       DE-A1- 3 908 464
GB-A- 2 061 505**

**Beschreibung**

Die Erfindung betrifft ein Verfahren zum Betrieb eines Vortexdurchflussmessgeräts zur Messung des Durchflusses eines durch ein Messrohr strömenden Fluids, mit mindestens einem im Messrohr angeordneten Störkörper zur Erzeugung von Wirbeln im Fluid, mindestens einem ersten Sensor und mindestens einem zweiten Sensor zur Messung der mit den Wirbeln einhergehenden Druckschwankungen im Fluid und mit einer Signalverarbeitungsvorrichtung zur Verarbeitung der Signale $x_1$ des ersten Sensors und der Signale $x_2$ des zweiten Sensors, wobei die durch die Druckschwankungen erzeugten Signale $x_1$ des ersten Sensors gegenphasig zu den durch die Druckschwankungen erzeugten Signalen $x_2$ des zweiten Sensors sind, wobei ein erstes Signal $y_1$ durch Multiplikation des Signals $x_1$ des ersten Sensors mit einem Korrekturfaktor v und ein zweites Signal $y_2$ durch Multiplikation des Signals $x_2$ des zweiten Sensors mit einem Korrekturfaktor w erhalten wird, wobei ein den Durchfluss wiedergebendes Nutzsignal $y_d$ die Differenz aus dem aus dem Signal des ersten Sensors abgeleiteten ersten Signal $y_1$ und aus dem aus dem Signal des zweiten Sensors abgeleiteten zweiten Signal $y_2$ ist und wobei durch die Subtraktion die den gegenphasigen Sensorsignalen überlagerten gleichphasigen Störsignale eliminiert werden. Die Erfindung betrifft darüber hinaus auch ein Vortexdurchflussmessgerät, das mit dem genannten Verfahren betrieben wird.

Das Messprinzip von Vortexdurchflussmessgeräten beruht auf den sich vom im Messrohr angeordneten und vom Fluid umströmten Störkörper ablösenden Wirbeln. Bei dem Fluid kann es sich um ein Gas, Dampf oder eine Flüssigkeit handeln. Strouhal hat als erster beobachtet, dass die Wirbelablösefrequenz proportional zur Strömungsgeschwindigkeit des Fluids im Messrohr ist, weshalb die Wirbelablösefrequenz ein Maß für den Durchfluss durch das Messrohr ausgedrückt als Volumenstrom ist. Unter Verwendung der Dichte des Fluids kann der Durchfluss auch als Massestrom angegeben werden. Das durch den Störkörper hervorgerufene Strömungsfeld des Fluids wurde von Kärmän erforscht und mathematisch beschrieben, weshalb das Strömungsfeld auch als Kannansche Wirbelstraße bezeichnet wird. Die proportionale Abhängigkeit zwischen der Strömungsgeschwindigkeit und der Wirbelablösefrequenz wird durch die von der Reynoldszahl abhängige Strouhalzahl beschrieben. Die Abhängigkeit der Strouhalzahl von der Reynoldszahl wird maßgeblich von der Ausgestaltung des Störkörpers beeinflusst. Bei aktuellen Vortexdruchflussmessgeräten ist der Fehler bezogen auf den Volumenstrom für Fluide mit einer Reynoldszahl zwischen 10000 und 20000 kleiner als $\pm 2\%$ und für Fluide mit einer Reynoldszahl größer als 20000 kleiner als $\pm 1\%$. Vortexdurchflussmessgeräte zeichnen sich durch einen mechanisch robusten Aufbau und geringe Empfindlichkeit für Verschleiß, Korrosion und Ablagerungen aus. Sie können sowohl Gase und Dämpfe als auch Flüssigkeiten mit Reynoldszahlen über einen weiten Bereich unabhängig von Druck, Temperatur mit guter Genauigkeit und unabhängig von der Einbaulage messen. Aufgrund der genannten Eigenschaften werden Vortexdurchflussmessgeräte in einer Vielzahl von Anwendungen zur Durchflussmessung von Fluiden, insbesondere von aggressiven Fluiden, beispielsweise in der petrochemischen, chemischen, pharmazeutischen oder Lebensmittelindustrie eingesetzt.

Aus dem Stand der Technik bekannte Vortexdurchflussmessgeräte messen die Wirbelfrequenz für gewöhnlich mittelbar über die Messung der mit den Wirbeln einhergehenden Druckschwankungen im strömenden Fluid. Oftmals sind die Störkörper derart ausgestaltet, dass die Druckänderungen eine Kraft auf den Störkörper ausüben und den Störkörper entsprechend auslenken bzw. deformieren, wobei an den Deformationsstellen ein erster und ein zweiter piezoelektrischer Sensor angeordnet sind. Eine durch eine Druckschwankung hervorgerufene mechanischen Anregung der Sensoren durch eine Deformation bewirkt eine Veränderung der Polarisationen der Sensoren und setzt damit Ladungsträger in den Sensoren frei in der Art, dass durch die mechanische Anregung der erste Sensor eine positive Ladung als Signal aufweist und der zweite Sensor eine negative Ladung als Signal aufweist. Die Empfindlichkeit eines piezoelektrischen Sensors wird beschrieben durch die sich ergebende Ladung als Funktion der wirkenden Kraft. Bei durch die Wirbel verursachten Druckschwankungen sind die Phasenlagen der Ladungssignale der Sensoren immer entgegengesetzt. Die Signalverarbeitung umfasst für jeden der beiden Sensoren einen Ladungsverstärker und einen Subtrahierer, wobei die Ladungsverstärker die Ladungssignale in proportionale Spannungssignale konvertieren und der Subtrahierer die Spannungssignale voneinander subtrahiert und aus dem resultierenden Nutzspannungssignal der Durchfluss abgeleitet wird.

Durch die Bildung der Differenz des Signals des ersten Sensors und des Signals des zweiten Sensors werden die mechanische Störanregungen, die Störsignale gleicher Phasenlage und gleicher Amplitude in den Sensoren generieren, eliminiert, falls beide Sensoren die exakt gleiche Empfindlichkeit aufweisen und die Signalverarbeitung für beide Sensoren exakt symmetrisch ist. Die mechanischen Störanregungen entstehen beispielsweise durch Turbinen, die Störschwingungen auf das Messrohr übertragen und auf diese Weise die Sensoren derart mechanisch Anregen, dass beide Sensoren weitestgehend Signale gleicher Phasenlage und gleicher Amplitude erzeugen.

Da durch Fertigungstoleranzen - beispielsweise der Sensoren selbst oder bei dem Einbau der Sensoren - der erste Sensor und der zweite Sensor unterschiedliche Empfindlichkeiten aufweisen, können Störschwingungen gleicher Phasenlage und gleicher Amplitude jedoch in den Sensoren Signale zwar mit gleicher Phasenlage aber unterschiedlicher Amplitude erzeugen. Hinzu kommt auch, dass die Signalverarbeitung beispielsweise durch Toleranzen der in der Signalverarbeitung verwendeten Bauelemente wie Kondensatoren und Widerstände nicht symmetrisch für die Signale des ersten und des zweiten Sensors ist. Nach der Bildung der Differenz verbleibt ein Störsignal im Nutzsignal und verschlechtert die Genauigkeit der gattungsgemäßen Vortexdurchflussmessgeräte. Ein Kalibrieren durch Trimmen der Sensoren ist mit hohen Kosten und großem Aufwand verbunden. Abgesehen davon ist die Langzeitstabilität der Empfindlichkeit unbekannt, so dass gegebenenfalls unpraktikables Kalibrieren im eingebauten Zustand erforderlich wird.

Für die Bestimmung des Durchflusses mit einem Vortexdurchflussmessgerät werden gemäß der Offenlegungsschrift DE 39 08 464 A1 die durch die Wirbel erzeugten Druckschwankungen von zwei Membranen abgegriffen. Die über jeweils eine Brückenschaltung dafür erzeugten elektrischen Signale werden über jeweils einen regelbaren Verstärker einem Differentialverstärker zugeführt, dessen Ausgangssignal ausgewertet wird. Um Störsignale zu eliminieren, werden bei einer Voreinstellung die Verstärkungsfaktoren so eingestellt, dass die verstärkten Signale gleich groß sind.

In der Offenlegungsschrift GB 2 061 505 A werden zwei Drähte hinter einem Störkörper durch jeweils einen separat einstellbaren elektrischen Strom auf einer konstanten Temperatur gehalten. Durch die Wirbel werden die Drähte abgekühlt, so dass die heizenden Ströme nachgeführt werden müssen. Eine Differenz der nachgeführten Ströme dient der Ermittlung der Frequenz der erzeugten Wirbel und aus einem gemittelten Wert wird die mittlere Strömungsgeschwindigkeit ermittelt. Eine Verwendung von zwei beheizten Drähten hinter einem Störkörper beschreibt ebenfalls die Offenlegungsschrift CA 892 698.

Aufgabe der vorliegenden Erfindung ist daher die Angabe eines effizienten und kostengünstigen Verfahrens zur verbesserten Eliminierung der Wirkung von Störsignalen gleicher Phasenlage und insbesondere gleicher Amplitude und die Angabe eines entsprechenden gattungsgemäßen Vortexdurchflussmessgeräts.

Das erfindungsgemäße Verfahren zum Betrieb eines Vortexdurchflussmessgeräts, bei dem die zuvor hergeleitete und aufgezeigte Aufgabe gelöst ist, ist zunächst und im Wesentlichen dadurch gekennzeichnet, dass das Nutzsignal $y_d$ aus der Differenz zwischen dem ersten Signal $y_1$ und dem zweiten Signal $y_2$ gewonnen wird und ein Summensignal $y_s$ aus der Summe des ersten Signals $y_1$ und des zweiten Signals $y_2$ gebildet wird, dass die Korrelation zwischen dem Nutzsignal $y_d$ und dem Summensignal $y_s$ bestimmt wird und dass die Korrelation durch Variation der Korrekturfaktoren $v$ und $w$ minimiert wird, wobei die minimale Korrelation einen minimalen Gehalt des Nutzsignals $y_d$ an gleichphasigen Störsignalen bedeutet.

Die verbesserte Eliminierung der Wirkung von Störsignalen gleicher Phasenlage und insbesondere auch gleicher Amplitude erfolgt durch Kompensation der unterschiedlichen Empfindlichkeiten der Sensoren durch Multiplikation des Signals $x_1$ des ersten Sensors mit dem Korrekturfaktor $v$ und durch Multiplikation des Signals $x_2$ des zweiten Sensors mit dem Korrekturfaktor $w$. Als Indikator für die Größe der Korrekturfaktoren dient die Korrelation von Nutzsignal $y_d$ und Summensignal $y_s$. Sowohl die Multiplikation mit den Korrekturfaktoren $v$ und $w$ als auch die Bestimmung der Korrelation sind in der Signalverarbeitungsvorrichtung implementiert. Weisen beispielsweise die Signale der Sensoren entgegengesetzte Phasenlagen und unterschiedliche Amplituden auf, so ist das Summensignal $y_s$ von Null verschieden und das Nutzsignal $y_d$ und das Summensignal $y_s$ sind miteinander korreliert.

Durch Variation der Korrekturfaktoren $v$ und $w$ verschwindet das Summensignal $y_s$ und mit diesem auch die Korrelation von Nutzsignal $y_d$ und Summensignal $y_s$. Das Ziel bei der Variation der Korrekturfaktoren $v$ und $w$ ist demnach eine Minimierung der Korrelation und im Idealfall eine Nicht-Korrelation von Nutzsignal $y_d$ und Summensignal $y_s$. Weisen die Signale der Sensoren Störsignale gleicher Phasenlage und insbesondere gleicher Amplitude auf, führt die Minimierung der Korrelation zu einer zumindest verbesserten Eliminierung der Störsignale, wobei das Verfahren auch zu einer verbesserten Eliminierung der Störsignale bei unterschiedlichen Amplituden der gleichphasigen Störsignale führt.

Der wesentliche Vorteil des erfindungsgemäßen Verfahrens ist, dass das Verfahren mit nur geringem Aufwand in bestehenden gattungsgemäßen Vortexdurchflussmessgeräten umgesetzt werden kann und dass ein aufwändiges und kostenintensives Kalibrieren nicht erforderlich ist, vielmehr kann das Verfahren kontinuierlich angewendet werden. Das Verfahren kann auch langsame Veränderungen wie beispielsweise eine unterschiedliche Drift der Empfindlichkeiten der Sensoren kompensieren oder adaptiv die Empfindlichkeiten der Sensoren an Störsignale anpassen.

Gemäß einer bevorzugten Ausgestaltung des erfindungsgemäßen Verfahrens ist vorgesehen, dass entweder dem Korrekturfaktor $v$ der Wert 1 zugewiesen wird und der Wert des Korrekturfaktors $w$ variiert wird oder dass dem Korrekturfaktor $w$ der Wert 1 zugewiesen wird und der Wert des Korrekturfaktors $v$ variiert wird. Ein Korrekturfaktor kann in Abhängigkeit von dem ihm zugewiesenen Wert das Signal eines Sensors verstärken, der Wert des Korrekturfaktors ist dann größer als 1, oder das Signal des Sensors dämpfen, der Wert des Korrekturfaktors ist dann kleiner als 1, oder das Signal des Sensors unverändert belassen, der Wert des Korrekturfaktors ist dann gleich 1. Ist der Wert eines Korrekturfaktors konstant 1, so entfällt praktisch die Implementierung der Multiplikation des Signals des Sensors mit dem Korrekturfaktor in der Signalverarbeitungsvorrichtung, wodurch die Signalverarbeitungsvorrichtung vereinfacht wird.

In einer ganz besonders bevorzugten Ausgestaltung des erfindungsgemäßen Verfahrens ist vorgesehen, dass ein Korrekturfaktor $k$ sowohl den Korrekturfaktor $v$ als auch den Korrekturfaktor $w$ substituiert durch $v = k$ und $w = 1 - k$. Dem Korrekturfaktor $k$ können von der Signalverarbeitungsvorrichtung dabei Werte aus dem geschlossenen Intervall [0;1] zugewiesen werden. Durch das Substituieren der beiden Korrekturfaktoren $v$ und $w$ durch den einen Korrekturfaktor $k$ wird das Finden der minimalen Korrelation zwischen Nutzsignal $y_d$ und Summensignal $y_s$ vereinfacht, ohne die Qualität des Verfahrens zu beeinträchtigen.

In einer weiteren bevorzugten Ausgestaltung des Verfahrens erfolgt die Signalverarbeitung zeitdiskret und die Korrelation zwischen Nutzsignal $x_d$ und Summensignal $x_s$ wird durch den Korrelationsfaktor

$$\rho[n] = \frac{Y_{ds}[n]}{\sqrt{Y_d[n]Y_s[n]}}$$

mit

$$Y_{ds}[n] = \sum_{i=1}^{n} y_d[i]y_s[i], \ Y_d[n] = \sum_{i=1}^{n} y_d^2[i] \ \text{und} \ Y_s[n] = \sum_{i=1}^{n} y_s^2[i]$$

bestimmt, wobei $n$ die Nummer der aktuellen Messung ist. Das Spannungssignal des ersten Sensors und das Spannungssignal des zweiten Sensors werden unmittelbar mit Analog-Digital-Umsetzern digitalisiert und die Signalverarbeitung erfolgt im digitalen Teil der Signalverarbeitungsvorrichtung durch einen Mikrocontroller. Durch die im Wesentlichen im Mikrocontroller vollzogene Signalverarbeitung ist es auf einfache Weise möglich, Änderungen an der Signalverarbeitung durch Umprogrammierung vorzunehmen.

Ganz besonders bevorzugt erfolgt die Berechnung des Korrelationsfaktors p gemäß der Formel

$$\rho[n] = \frac{Y_{ds}[n]}{\sqrt{Y_d[n]Y_s[n]}}$$

mit

$$Y_{ds}[n] = (1-c)Y_{ds}[n-1] + cy_d[n]y_s[n],$$

$$Y_d[n] = (1-c)Y_d[n-1] + cy_d^2[n]$$

und

$$Y_s[n] = (1-c)Y_s[n-1] + cy_s^2[n],$$

wobei $c$ eine Zeitkonstante ist. Der Vorteil der Berechnung des Korrelationsfaktors mit der oben genannten Formel gegenüber der Formel aus der vorgenannten bevorzugten Ausgestaltung ist ein wesentlich reduzierter Rechenaufwand. Durch den reduzierten Rechenaufwand ist es auf einfache Weise möglich, das erfindungsgemäße Verfahren in bestehende Vortexdurchflussmessgeräte mit verhältnismäßig geringer Rechenleistung zu implementieren.

Bei einer weiteren ganz besonders vorteilhaften Ausgestaltung des erfindungsgemäßen Verfahrens ist vorgesehen, dass die mit einer bestmöglichen Eliminierung gleichphasiger Störsignale einhergehende minimale Korrelation in einem Regelkreis bestimmt wird, der Teil der Signalverarbeitung ist. Der Regelkreis umfasst einen Signalberechner, einen Korrelationsberechner, einen Differenzbilder und einen Proportional-Integral-Regler. Der Signalberechner berechnet sowohl das Nutzsignal $y_d$ als auch das Summensignal $y_s$. Der Korrelationsberechner berechnet aus dem Nutzsignal $y_d$ und dem Summensignal $y_s$ die Ist-Korrelation und der Differenzbilder subtrahiert die Ist-Korrelation von der Soll-Korrelation, wobei die Soll-Korrelation die Nicht-Korrelation ist. Die Differenz zwischen Soll-Korrelation und Ist-Korrelation ist die Regeldifferenz und daher die Eingangsgröße des Reglers, der den als Steuergröße dienenden Korrekturfaktor $k$ variiert.

Die Erfindung betrifft ferner ein derart eingerichtetes gattungsgemäßes Vortexdurchflussmessgerät mit den vorgenannten Merkmalen, insbesondere mit einer Signalverarbeitungsvorrichtung, wobei die Signalverarbeitungsvorrichtung so eingerichtet ist, dass mit ihr das zuvor beschriebene erfindungsgemäße Verfahren ausführbar ist und sie im Betrieb das beschriebene erfindungsgemäße Verfahren auch ausführt.

In einer bevorzugten Ausgestaltung der Erfindung wird das Spannungssignal des ersten Sensors unmittelbar nach einer Anti-Alias-Filterung digitalisiert und das Spannungssignal des zweiten Sensors nach einer Anti-Alias-Filterung digitalisiert, so dass eine Verknüpfung der Signale in der digitalen Domäne erfolgt.

Im Einzelnen gibt es nun verschiedene Möglichkeiten, das erfindungsgemäße Verfahren zum Betrieb eines Vortexdurchflussmessgeräts und das erfindungsgemäße Vortexdurchflussmessgerät auszugestalten und weiterzubilden. Dazu wird verwiesen auf die den Patentansprüchen 1 und 8 nachgeordneten Patentansprüche und die Beschreibung eines bevorzugten Ausführungsbeispiels in Verbindung mit der Zeichnung. In der Zeichnung zeigen

Fig. 1    ein in schematischer geschnittener Aufsicht dargestelltes Ausführungsbeispiel eines aus dem Stand der Technik bekannten Störkörpers mit einem ersten und einem zweiten piezoelektrischen Sensor,

Fig. 2    eine symbolische Darstellung der Bestimmung eines Nutzsignals $u_d$ aus den durch eine mechanische Anregung von einem ersten und einem zweiten Sensor gleicher Empfindlichkeit verursachten Spannungssignalen $u_1$ und $u_2$ durch die in Fig. 7 gezeigte Signalverarbeitung,

Fig. 3    eine symbolische Darstellung der Bestimmung des Nutzsignals $u_d$ aus den durch die mechanische Anregung von einem ersten und einem zweiten Sensor unterschiedlicher Empfindlichkeit verursachten Spannungssignalen $u_1$ und $u_2$ durch die in Fig. 7 gezeigte Signalverarbeitung,

Fig. 4    eine symbolische Darstellung der grundlegenden erfindungsgemäßen Idee zur Ausführung der Kompensation der Wirkung unterschiedlicher Empfindlichkeiten des ersten und des zweiten Sensors,

Fig. 5    ein als Blockdiagramm dargestelltes Ausführungsbeispiel des erfindungsgemäßen Regelkreises, der die in Fig. 6 beschriebene Funktionalität umfasst,

Fig. 6    ein als Blockdiagramm dargestelltes Ausführungsbeispiel der erfindungsgemäßen Bestimmung eines Nutzsignals $y_d$ und eines Summensignals $y_s$ aus den digitalisierten Spannungssignalen $u_1$ und $u_2$, das sind $x_1$ und $x_2$,

Fig. 7    ein als Blockdiagramm dargestelltes Ausführungsbeispiel einer aus dem Stand der Technik bekannten Signalverarbeitung und

Fig. 8    ein als Blockdiagramm dargestelltes Ausführungsbeispiel der erfindungsgemäßen Signalverarbeitung, die die in Fig. 5 beschriebene Funktionalität umfasst.

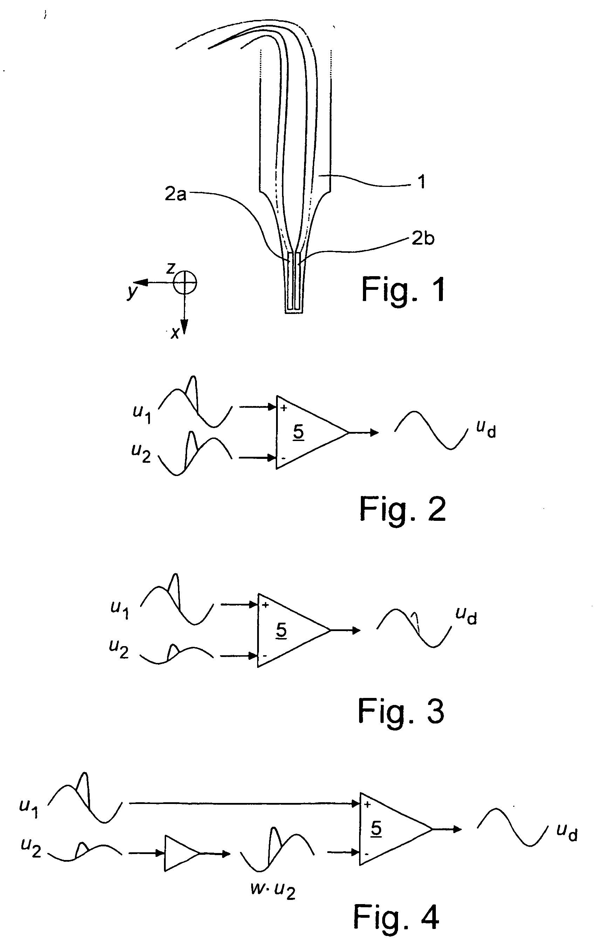

Fig. 1 zeigt in geschnittener schematischer Darstellung die Aufsicht auf einen aus dem Stand der Technik bekannten Störkörper 1. Im im Messrohr angeordneten Zustand wird der Störkörper 1 von einem Fluid in positiver $x$-Richtung umströmt. Die vom Störkörper 1 hervorgerufenen und sich von ihm ablösenden Wirbel im Fluid erzeugen im verjüngten Bereich des Störkörpers 1 Druckschwankungen, die Kräfte auf den Störkörper 1 entlang der $y$-Achse im verjüngten Bereich des Störkörpers 1 ausüben. Diese Kräfte führen zu Auslenkungen bzw. Deformationen des Störkörpers 1. Im Bereich der Deformationen sind ein erster piezoelektrischer Sensor 2a und ein zweiter piezoelektrischer Sensor 2b mit dem Störkörper 1 verbunden, infolgedessen die piezoelektrischen Sensoren 2 mechanischen Spannungen ausgesetzt sind. Die mechanischen Spannungen verändern die Polarisation der Sensoren 2, wodurch sich eine elektrische Ladung $q_1$ auf dem ersten Sensor 2a als Signal und eine elektrische Ladung $q_2$ auf dem zweiten Sensor 2b als Signal ergibt. Die Ladungsmenge ist ein Maß für die wirkende Kraft. Die Sensoren 2a, 2b sind derart ausgestaltet und am Störkörper 1 angeordnet, dass die Polarität der sich durch eine Kraft entlang der $y$-Achse auf dem ersten Sensor 2a ergebenden Ladung $q_1$ entgegengesetzt zu der Polarität der sich durch die Kraft auf dem zweiten Sensor 2b ergebenden Ladung $q_2$ ist, wobei die Polaritäten der Ladungen $q_1$ und $q_2$ bei entlang der $x$- oder $z$-Achse wirkenden Kräften gleich sind. In einer alternativen Ausführung sind die Sensoren nicht mit dem Störkörper verbunden, sondern mit einem Paddel, dass in Strömungsrichtung hinter dem Störkörper angeordnet ist.

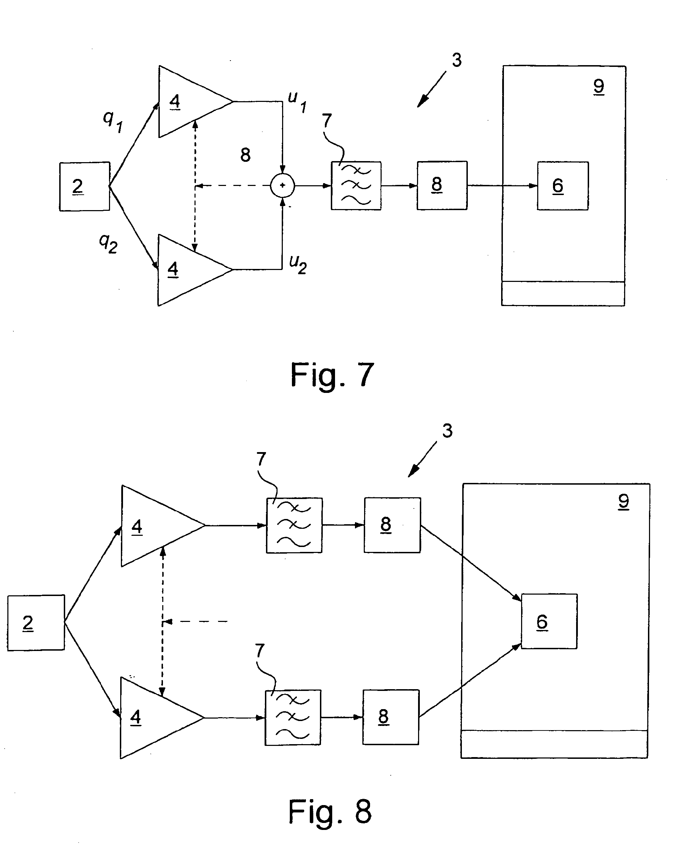

Fig. 7 zeigt eine aus dem Stand der Technik bekannte Signalverarbeitungsvorrichtung 3. Die sich auf den piezoelektrischen Sensoren 2 ergebenden Ladungen $q_1$ und $q_2$ werden von Ladungsverstärkern 4 in zu den Ladungen $q_1$ und $q_2$ proportionale Signalspannungen $u_1$ und $u_2$ konvertiert. Die Signalspannungen $u_1$ und $u_2$ werden von einem Subtrahierer 5 subtrahiert und die resultierende Differenzspannung $u_d = u_1-u_2$ ist eine Nutzsignalspannung, die ein Maß für den Durchfluss ist. Vor der Digitalisierung der Nutzsignalspannung $u_d$ in einem Analog-Digital-Umsetzer 6 wird die Nutzsignalspannung $u_d$ konditioniert. Zum einen wird die Nutzsignalspannung $u_d$ mit einem Tiefpass 7 gefiltert, um Alias-Effekte zu vermeiden, und zum anderen wird die Nullpunktspannung der Nutzsignalspannung $u_d$ in einer Vorspannvorrichtung 8 eingestellt, so dass der Aussteuerbereich des Analog-Digital-Umsetzers 6 weitestgehend ausgeschöpft wird. Der Analog-Digital-Umsetzer 6 ist eine Komponente eines Mikrocontrollers 9, in dem die weitere Verarbeitung des digitalisierten Spannungssignals $u_d$, das ist $x_d$, erfolgt.

Weisen der erste Sensor 2a und der zweite Sensor 2b gleich große Empfindlichkeiten auf, so verursacht die durch die Wirbel hervorgerufene mechanische Anregung des Störkörpers 1 betragsmäßig gleich große Ladungen $q_1=q$ und $q_2=-q$ auf den piezoelektrischen Sensoren mit entgegengesetzter Polarität. Die Ladungen $q_1$ und $q_2$ werden von den Ladungsverstärkern 4 in die Spannungen $u_1$ und $u_2$ konvertiert, die sowohl gegenphasig als auch betragsmäßig gleich sind. Eine zum Beispiel durch Vibrationen erzeugte zusätzliche mechanische Anregung in $z$-Richtung bewirkt eine Überlagerung der Signalspannungen $u_1$ und $u_2$ mit gleichphasigen Störsignalen, wobei die Größe der Störsignale bei beiden Sensoren 2 gleich groß ist. Fig. 2 zeigt ein entsprechendes Beispiel. Durch das Bilden der Nutzsignalspannung $u_d$ durch Subtraktion der Signalspannungen $u_1$ und $u_2$ voneinander werden die gleichphasigen Störsignale gleicher Größe vollständig eliminiert. Sind die Größen der gleichphasigen Störsignale unterschiedlich, so werden die gleichphasigen Störsignale zumindest reduziert.

Tatsächlich weisen der erste Sensor 2a und der zweite Sensor 2b jedoch unterschiedliche Empfindlichkeiten auf. Mögliche Ursachen liegen in den piezoelektrischen Materialen der Sensoren 2 selbst oder ergeben sich durch unvermeidbare geringe Toleranzen bei der Anordnung der Sensoren 2 auf dem Störkörper 1. Fig. 3 zeigt die Signalspannungen $u_1$ und $u_2$ bei der gleichen mechanischen Anregung des Störkörpers 1 wie im anhand von Fig. 2 beschriebenen Fall, nur ist hier die Empfindlichkeit des zweiten Sensors 2b geringer als die Empfindlichkeit des ersten Sensors 2a. Durch die unterschiedlichen Empfindlichkeiten der Sensoren 2 werden die gleichphasigen Störsignale nicht vollständig eliminiert und reduzieren die Qualität der den Durchfluss anzeigenden Nutzsignalspannung $u_d$. Sowohl ein Trimmen der beiden Sensoren 2 selbst, so dass die Empfindlichkeit der Sensoren 2 gleich ist, als auch ein Kalibrieren der Vortexdurchflussmessgeräte ist mit hohem Aufwand und damit einhergehenden hohen Kosten verbunden und daher unpraktikabel.

Fig. 4 zeigt die grundlegende erfindungsgemäße Idee zur Ausführung der Kompensation oder zumindest der Verminderung der abträglichen Wirkung unterschiedlicher Empfindlichkeiten der Sensoren 2 auf die Nutzsignalspannung $u_d$ und damit auf den gemessenen Durchfluss, insbesondere für gleichphasige Störsignale. Die Idee ist, eine der beiden Signalspannungen $u_1$ und $u_2$ - in Fig. 4 ist es $u_2$ - mit einem Korrekturfaktor $w$ zu multiplizieren und den Korrekturfaktor $w$ derart zu wählen, dass die abträgliche Wirkung der unterschiedlichen Empfindlichkeiten auf die Nutzsignalspannung $u_d$ minimal ist. Im dargestellten Ausführungsbeispiel ist die Empfindlichkeit des zweiten Sensors 2b geringer als die Empfindlichkeit des ersten Sensors 2a, weshalb die Signalspannung $u_2$ des zweiten Sensors 2b mit einem Faktor $w$ größer als 1 verstärkt wird. Wäre die Empfindlichkeit des zweiten Sensors 2b größer als die Empfindlichkeit des ersten Sensors 2a, so wäre der Faktor $w$ kleiner als 1.

Selbstverständlich ist es auch möglich, zusätzlich die Signalspannung $u_1$ des ersten Sensors 2a mit einem Korrekturfaktor $v$ zu verstärken ($v>1$) oder zu dämpfen ($v<1$).

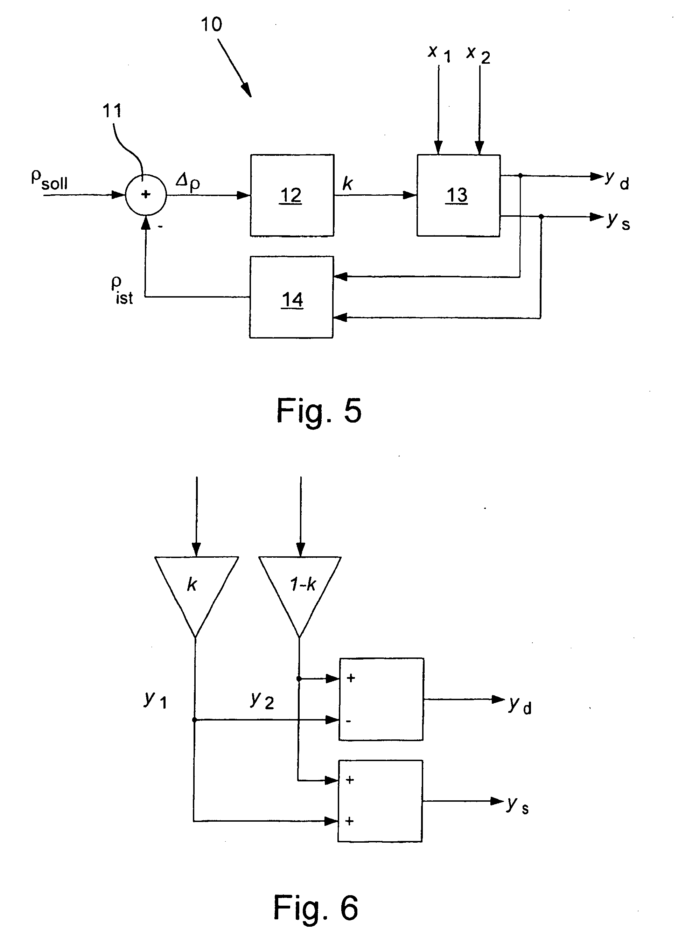

Das erfindungsgemäße Verfahren zum Finden des optimalen Korrekturfaktors $w$ beruht auf der überraschenden Eigenschaft, dass die abträgliche Wirkung unterschiedlicher Empfindlichkeiten auf die Nutzsignalspannung $u_d=u_1-wu_2$ dann minimal ist, wenn auch die Korrelation zwischen der Nutzsignalspannung $u_d$ und einer Summensignalspannung $u_s=u_1+wu_2$ minimal ist. In Fig. 6 veranschaulicht ein Blockdiagramm das erfindungsgemäße Verfahren zur Bestimmung eines Nutzsignals $y_d$ und eines Summensignals $y_s$. Die Signale $x_1$ und $x_2$ sind die digitalisierten Signalspannungen $u_1$ und $u_2$. Durch Multiplikation von $x_1$ mit einem Korrekturfaktor $v=k$ wird ein erstes Signal $y_1$ erzeugt und durch Multiplikation von $x_2$ mit dem Korrekturfaktor $w=(1-k)$ wird ein zweites Signal $y_2$ erzeugt. Das Nutzsignal ist $y_d=y_2-y_1=(1-k)x_2-kx_1$ und das Summensignal ist $y_s y_2+y_1=(1-k)x_2+kx_1$. Der Vorteil der Verwendung der Korrekturfaktoren $k$ und $(1-k)$ ist, dass als Wertevorrat für $k$ das geschlossene Intervall [0,1] ausreichend ist.

Fig. 5 zeigt einen Regelkreis 10 als Ausführungsbeispiel der Umsetzung des Verfahrens zum Finden des optimalen Korrekturfaktors $k$. Der Regelkreis 10 umfasst einen Differenzbilder 11, einen Proportional-Integral-Regler 12, einen Signalberechner 13 und einen Korrelationsberechner 14. Der Signalberechner 13 berechnet aus den Signalen $x_1$ und $x_2$ das Nutzsignal $y_d$ und das Summensignal $y_s$ entsprechend dem in Fig. 6 gezeigten Verfahren. Der Korrelationsberechner 14 berechnet den Ist-Korrelationsfaktor $\rho_{ist}$ zwischen dem Nutzsignal $y_d$ und dem Summensignal $y_s$. Der Soll-Korrelationsfaktor $\rho_{soll}$ ist Null, also keine Korrelation, und die Abweichung des Ist-Korrelationsfaktors $\rho_{ist}$ von dem Soll-Korrelationsfaktor $\rho_{soll}$ ist die Regeldifferenz $\Delta\rho=\rho_{soll}-\rho_{ist}$. Der Ist-Korrelationsfaktor wird gemäß

$$\rho_{ist}[n] = \frac{Y_{ds}[n]}{\sqrt{Y_d[n]Y_s[n]}}$$

mit

$$Y_{ds}[n] = (1-c)Y_{ds}[n-1] + cy_d[n]y_s[n],$$

$$Y_d[n] = (1-c)Y_d[n-1] + cy_d^2[n]$$

und

$$Y_s[n] = (1-c)Y_s[n-1] + cy_s^2[n]$$

berechnet, wobei $c$ eine Zeitkonstante ist. Die Regeldifferenz $\Delta\rho$ ist die Eingangsgröße des PI-Reglers, der den Korrekturfaktor $k$ variiert. Der Regelvorgang ist abgeschlossen, wenn die Korrelation zwischen Nutzsignal $y_d$ und Summensignal $y_s$ minimal ist.

Fig. 8 zeigt ein Blockdiagramm einer erfindungsgemäßen Signalverarbeitungsvorrichtung 3. Die von den piezoelektrischen Sensoren 2 generierten Ladungen $q_1$ und $q_2$ werden durch die Ladungsverstärker 4 in zu den Ladungen $q_1$ und $q_2$ proportionale Spannungen $u_1$ und $u_2$ konvertiert. Vor der Digitalisierung der Signalspannungen $u_1$ und $u_2$ in dem Analog-Digital-Umsetzer 6 mit zwei Signalspannungseingängen werden die Signalspannungen $u_1$ und $u_2$ zunächst konditioniert. Das beinhaltet zum einen die Filterung der Signalspannungen $u_1$ und $u_2$ in den Tiefpassfiltern 7 zur Vermeidung von Alias-Effekten und zum anderen die Einstellung der Nullpunktspannungen der Sensoren zur bestmöglichen Ausnutzung des Aussteuerbereichs des Analog-Digital-Umsetzers 6 in den Vorspannvorrichtungen 8. Im Gegensatz zu der in Fig. 7 gezeigten aus dem Stand der Technik bekannten Signalverarbeitungsvorrichtung 3 erfolgt in der in Fig. 8 gezeigten Signalverarbeitung 3 eine Verknüpfung der Signale der beiden Sensoren erst nach der Analog-Digital-Wandlung. Auf diese Weise können die Signale beliebig miteinander verknüpft und weiterverarbeitet werden. In dem Mikrocontroller 9 ist sowohl die Berechnung des Nutzsignals $y_d$ und des Summensignals $y_s$, wie in Fig. 6 dargelegt, als auch der Regelkreis 10 implementiert.

## Patentansprüche

1. Verfahren zum Betrieb eines Vortexdurchflussmessgeräts zur Messung des Durchflusses eines durch ein Messrohr strömenden Fluids, mit mindestens einem im Messrohr angeordneten Störkörper (1) zur Erzeugung von Wirbeln im Fluid, mindestens einem ersten Sensor (2a) und mindestens einem zweiten Sensor (2b) zur Messung der mit den Wirbeln einhergehenden Druckschwankungen im Fluid und mit einer Signalverarbeitungsvorrichtung (3) zur Verarbeitung der Signale $x_1$ des ersten Sensors (2a) und der Signale $x_2$ des zweiten Sensors (2b), wobei die durch die Druckschwankungen erzeugten Signale $x_1$ des ersten Sensors (2a) gegenphasig zu den durch die Druckschwankungen erzeugten Signalen $x_2$ des zweiten Sensors (2b) sind, wobei ein erstes Signal $y_1$ durch Multiplikation des Signals $x_1$ des ersten Sensors (2a) mit einem Korrekturfaktor v und ein zweites Signal $y_2$ durch Multiplikation des Signals $x_2$ des zweiten Sensors (2b) mit einem Korrekturfaktor w erhalten wird, wobei ein den Durchfluss wiedergebendes Nutzsignal $y_d$ die Differenz aus dem aus dem Signal des ersten Sensors (2a) abgeleiteten ersten Signal $y_1$ und aus dem aus dem Signal des zweiten Sensors (2b) abgeleiteten zweiten Signal $y_2$ ist und wobei durch die Subtraktion die den gegenphasigen Sensorsignalen überlagerten gleichphasigen Störsignale eliminiert werden, **dadurch gekennzeichnet,**
**dass** als Nutzsignal $y_d$ die Differenz zwischen dem ersten Signal $y_1$ und dem zweiten Signal $y_2$ gebildet wird und ein Summensignal $y_s$ aus der Summe des ersten Signals $y_1$ und des zweiten Signals $y_2$ gebildet wird,
**dass** die Korrelation zwischen dem Nutzsignal $y_d$ und dem Summensignal $y_s$, bestimmt wird und
**dass** die Korrelation durch Variation der Korrekturfaktoren v und w minimiert wird, wobei die minimale Korrelation einen minimalen Gehalt des Nutzsignals $y_d$ an gleichphasigen Störsignalen bedeutet.

2. Verfahren nach Anspruch 1, **dadurch gekennzeichnet, dass** entweder der Korrekturfaktor v=1 oder der Korrekturfaktor w=1 ist, wobei der jeweils andere Korrekturfaktor variiert wird.

3. Verfahren nach Anspruch 1, **dadurch gekennzeichnet, dass** $k$ ein Korrekturfaktor aus dem geschlossenen Intervall [0;1] ist und *v=k* und *w*=1-*k* ist.

4. Verfahren nach einem der Ansprüche 1 bis 3, **dadurch gekennzeichnet, dass** die Korrelation bei zeitdiskreter Signalverarbeitung für die n-te Abtastung durch den Korrelationsfaktor $\rho[n] = \dfrac{Y_{ds}[n]}{\sqrt{Y_d[n]Y_s[n]}}$

mit $Y_{ds}[n] = \sum_{i=1}^{n} y_d[i]y_s[i]$, $Y_d[n] = \sum_{i=1}^{n} y_d^2[i]$ und $Y_s[n] = \sum_{i=1}^{n} y_s^2[i]$ bestimmt wird.

5. Verfahren nach einem der Ansprüche 1 bis 3, **dadurch gekennzeichnet, dass** die Korrelation bei zeitdiskreter Signalverarbeitung für die n-te Abtastung durch den Korrelationsfaktor $\rho[n] = \dfrac{Y_{ds}[n]}{\sqrt{Y_d[n]Y_s[n]}}$ mit $Y_{ds}(n)$=(1-c)$Y_{ds}$[n-1]+c$y_d[n]y_s[n]$, $Y_d[n] = (1-c)Y_d[n-1] + cy_d^2[n]$ und $Y_s[n] = (1-c)Y_s[n-1] + cy_s^2[n]$ bestimmt wird, wobei c eine Zeitkonstante ist.

6. Verfahren nach einem der Ansprüche 1 bis 5, **dadurch gekennzeichnet, dass** die minimale Korrelation mit einem Regelkreis (10) gefunden wird und der Regelkreis (10) einen Differenzbilder (11), einen Regler (12), einen Signalberechner (13) und einen Korrelationsberechner (14) umfasst, wobei der Differenzbilder (11) die Regeldifferenz aus der als Soll-Korrelation vorgegebenen Nicht-Korrelation und der Ist-Korrelation bildet, wobei die Regeldifferenz die Eingangsgröße des Reglers (12) ist, wobei wenigstens ein vom Regler (12) variierter Korrekturfaktor die Steuergröße ist, wobei der Signalberechner (13) das Nutzsignal $y_d$ und das Summensignal $y_s$ bildet, wobei der Korrelationsberechner (14) die Ist-Korrelation zwischen dem Nutzsignal $y_d$ und dem Summensignal $y_s$ bildet.

7. Verfahren nach Anspruch 6, **dadurch gekennzeichnet, dass** der Regler (12) ein PI-Regler ist.

8. Vortexdurchflussmessgeräts zur Messung des Durchflusses eines durch ein Messrohr strömenden Fluids, mit mindestens einem im Messrohr angeordneten Störkörper (1) zur Erzeugung von Wirbeln im Fluid, mindestens einem ersten Sensor (2a) und mindestens einem zweiten Sensor (2b) zur Messung der mit den Wirbeln einhergehenden Druckschwankungen im Fluid und mit einer Signalverarbeitungsvorrichtung (3) zur Verarbeitung der Signale $x_1$ des ersten Sensors (2a) und der Signale $x_2$ des zweiten Sensors (2b), wobei die durch die Druckschwankungen erzeugten Signale $x_1$ des ersten Sensors (2a) gegenphasig zu den durch die Druckschwankungen erzeugten Signalen $x_2$ des zweiten Sensors (2b) sind, wobei ein den Durchfluss wiedergebendes Nutzsignal $y_d$ die Differenz aus einem aus dem Signal des ersten Sensors (2a) abgeleiteten ersten Signal $y_1$ und aus einem aus dem Signal des zweiten Sensors (2b) abgeleiteten zweiten Signal $y_2$ ist und wobei durch die Subtraktion die den gegenphasigen Sensorsignalen überlagerten gleichphasigen Störsignale eliminiert werden,
**dadurch gekennzeichnet,**
**dass** die Signalverarbeitungseinrichtung (3) so eingerichtet ist, dass das Vortexdurchflussmessgerät im Betrieb das Verfahren nach einem der Ansprüche 1 bis 7 ausführt.

9. Vortexdurchflussmessgerät nach Anspruch 7, **dadurch gekennzeichnet, dass** das Signal jedes Sensors für sich analog-digital-umgesetzt wird.

**Claims**

1. Method for operating a vortex flowmeter device for measuring the flow of a fluid that flows through a measuring tube in which at least one baffle (1) is arranged for producing eddies in the fluid, at least one first sensor (2a) and at least one second sensor (2b) for measuring pressure fluctuations in the fluid that accompany eddies, and using a signal-processing device (3) for processing the signals $x_1$ of the first sensor (2a) and the signals $x_2$ of the second sensor (2b), whereby the signals $x_1$ of the first sensor (2a) produced by the pressure fluctuations are in phase opposition to the signals $x_2$ of the second sensor (2b) produced by the pressure fluctuations, wherein a first signal $y_1$ is obtained by multiplying the signal $x_1$ of the first sensor (2a) with a correction factor v, and a second signal $y_2$ is obtained by multiplying the signal $x_2$ of the second sensor (2b) with a correction factor w, wherein a wanted signal $y_d$ reproducing the flow is the difference between the first signal $y_1$ derived from the signal of the first sensor (2a) and of the second

signal $y_2$ derived from the signal of the second sensor (2b) and wherein same-phase interfering signals superimposed on anti-phase sensor signals are eliminated by the subtraction,

**characterized in**

**that** the wanted signal $y_d$ is formed by the difference between the first signal $y_1$ and the second signal $y_2$ and a sum signal $y_s$ is formed from a sum of the first signal $y_1$ and the second signal $y_2$,

**that** a correlation between the wanted signal $y_d$ and the sum signal $y_s$ is determined and

**that** the correlation by variation of the correction factors $v$ and $w$ is minimized, wherein the minimum correlation is a minimum content of the wanted signal $y_d$ on same-phase interfering signals.

2. Method according to claim 1, **characterized in that** either the correction factor is $v=1$ or the correction factor is $w=1$, wherein the other of the correction factors is varied.

3. Method according to claim 1, **characterized in that** $k$ is a correction factor from a closed interval [0; 1], and $v=k$ and $w=1-k$.

4. Method according to any one of claims 1 to 3, **characterized in that** the correlation is determined in time-discrete signal processing for an n<sup>th</sup> scanning by the correlation factor

$$\rho[n] = \frac{Y_{ds}[n]}{\sqrt{Y_d[n]Y_s[n]}}$$

with

$$Y_{ds}[n] = \sum_{i=1}^{n} y_d[i]y_s[i], \quad Y_d[n] = \sum_{i=1}^{n} y_d^2[i] \text{ and } Y_s[n] = \sum_{i=1}^{n} y_s^2[i]$$

5. Method according to any one of claims 1 to 5, **characterized in that** the correlation is determined by a time-discrete signal processing for an n<sup>th</sup> scanning using the correlation factor

$$\rho[n] = \frac{Y_{ds}[n]}{\sqrt{Y_d[n]Y_s[n]}}$$

with $Y_{ds}[n]$ = $(1-c)Y_{ds}[n-1]+c_{Yd}[n]y_s[n]$, $\quad Y_d[n] = (1-c)Y_d[n-1]+cy_d^2[n]$ and

$Y_s[n] = (1-c)Y_s[n-1]+cy_s^2[n]$, where c is a time constant.

6. Method according to any one of claims 1 to 5, **characterized in that** the minimum correlation is found with a control circuit (10), and the control circuit (10) comprises a deviation former (11), a regulator (12), a signal organizer (13), and a correlation organizer (14), wherein the deviation former (11) forms a system deviation from a non-correlation and an actual correlation specified as a target correlation, wherein the system deviation is an initial value of the regulator (12), wherein at least one correction factor that is varied by the regulator (12) is a control value, wherein the signal organizer (13) forms the wanted signal $y_d$ and the sum signal $y_s$, wherein the correlation organizer (14) forms the actual correlation between the wanted signal $y_d$ and the sum signal $y_s$.

7. Method according to claim 6, **characterized in that** the regulator (12) is a proportional-integral regulator.

8. Vortex flowmeter device for measuring the flow of a fluid that flows through a measuring tube having at least one baffle (1) arranged in the measuring tube for producing eddies in the fluid, comprising at least one first sensor (2a) and at least one second sensor (2b) for measuring the pressure fluctuations in the fluid that accompany the eddies and a signal-processing device (3) for processing signals $x_1$ of the first sensor (2a) and signals $x_2$ of the second

sensor (2b), wherein the signals $x_1$ of the first sensor (2a) produced by pressure fluctuations are anti-phase with the signals $x_2$ of the second sensor (2b) produced by pressure fluctuations, wherein a wanted signal $y_d$ reproducing the flow is the difference between the first signal $y_1$ derived from the signal of the first sensor (2a) and of the second signal $y_2$ derived from the signal of the second sensor (2b) and wherein same-phase interfering signals superimposed on anti-phase sensor signals are eliminated by the subtraction,

**characterized in**

**that** the signal-processing device (3) is designed so that during operation the vortex flowmeter performs the method according to any one of claims 1 to 7.

9. Vortex flowmeter device according to claim 7, **characterized in that** the signal of each sensor is individually converted from analog to digital.

## Revendications

1. Procédé pour faire fonctionner un débitmètre à effet vortex pour mesurer le débit d'un fluide qui s'écoule à travers un tube de mesure, comprenant au moins un corps perturbateur (1) disposé dans le tube de mesure pour générer des tourbillons dans le fluide, au moins un premier capteur (2a) et au moins un deuxième capteur (2b) pour mesurer les fluctuations de pression dans le fluide qui accompagnent les tourbillons et comprenant un dispositif de traitement de signal (3) pour le traitement des signaux $x_1$ du premier capteur (2a) et des signaux $x_2$ du deuxième capteur (2b), les signaux $x_1$ du premier capteur (2a) produits par les fluctuations de pression étant en opposition de phase avec les signaux $x_2$ du deuxième capteur (2b) produits par les fluctuations de pression, un premier signal $y_1$ étant obtenu en multipliant le signal $x_1$ du premier capteur (2a) par un facteur de correction v et un deuxième signal $y_2$ étant obtenu en multipliant le signal $x_2$ du deuxième capteur (2b) par un facteur de correction w, un signal utile $y_d$ restituant le débit étant la différence entre le premier signal $y_1$ dérivé du signal du premier capteur (2a) et le deuxième signal $y_2$ dérivé du signal du deuxième capteur (2b) et les signaux parasites de même phase qui sont superposés aux signaux des capteurs en opposition de phase étant éliminés par la soustraction,

**caractérisé en ce**

**que** le signal utile $y_d$ formé est la différence entre le premier signal $y_1$ et le deuxième signal $y_2$ et un signal total $y_s$ est formé à partir de la somme du premier signal $y_1$ et du deuxième signal $y_2$,

**que** la corrélation entre le signal utile $y_d$ et le signal total $y_s$ est déterminée et

**que** la corrélation est minimisée en faisant varier les facteurs de correction v et w, la corrélation minimale signifiant une teneur minimale en signaux parasites de même phase du signal utile $y_d$.

2. Procédé selon la revendication 1, **caractérisé en ce que** soit le facteur de correction v = 1, soit le facteur de correction w = 1, une variation étant appliquée à l'autre facteur de correction respectif.

3. Procédé selon la revendication 1, **caractérisé en ce que** k est un facteur de correction dans l'intervalle fermé [0;1] et v = k et w = 1-k.

4. Procédé selon l'une des revendications 1 à 3, **caractérisé en ce que** lors d'un traitement du signal discret dans le temps, la corrélation pour le n-ème échantillonnage est déterminée par le facteur de corrélation

$$\rho[n] = \frac{Y_{ds}[n]}{\sqrt{Y_d[n]Y_s[n]}}, \quad \text{où} \quad Y_{ds}[n] = \sum_{i-1}^{n} y_d[i]y_s[i], \quad Y_d[n] = \sum_{i-1}^{n} y^2_d[i] \quad \text{et}$$

$$Y_s[n] = \sum_{i-1}^{n} y^2_s[i].$$

5. Procédé selon l'une des revendications 1 à 3, **caractérisé en ce que** lors d'un traitement du signal discret dans le temps, la corrélation pour le n-ème échantillonnage est déterminée par le facteur de corrélation

$$\rho[n] = \frac{Y_{ds}[n]}{\sqrt{Y_d[n]Y_s[n]}}, \quad \text{où } Y_{ds}[n] = (1-c)Y_{ds}[n-1]+cy_d[n]y_s[n], \; Y_d[n] = (1-c)Y_d[n-1]+cy^2_d[n] \text{ et } Y_s[n] = (1-c)Y_s[n-1]$$

$+ cy^2_s[n]$, c étant une constante temporelle.

6. Procédé selon l'une des revendications 1 à 5, **caractérisé en ce que** la corrélation minimale est trouvée avec un circuit régulateur (10) et le circuit régulateur (10) comprend un soustracteur (11), un régulateur (12), un calculateur de signal (13) et un calculateur de corrélation (14), le soustracteur (11) formant la différence de régulation entre la non-corrélation prédéfinie en tant que corrélation de consigne et la corrélation réelle, la différence de régulation étant la grandeur d'entrée du régulateur (12), au moins un facteur de correction que fait varier le régulateur (12) étant la grandeur de commande, le calculateur de signal (13) formant le signal utile $y_d$ et le signal total $y_s$, le calculateur de corrélation (14) formant la corrélation réelle entre le signal utile $y_d$ et le signal total $y_s$.

7. Procédé selon la revendication 6, **caractérisé en ce que** le régulateur (12) est un régulateur PI.

8. Débitmètre à effet vortex pour mesurer le débit d'un fluide qui s'écoule à travers un tube de mesure, comprenant au moins un corps perturbateur (1) disposé dans le tube de mesure pour générer des tourbillons dans le fluide, au moins un premier capteur (2a) et au moins un deuxième capteur (2b) pour mesurer les fluctuations de pression dans le fluide qui accompagnent les tourbillons et comprenant un dispositif de traitement de signal (3) pour le traitement des signaux $x_1$ du premier capteur (2a) et des signaux $x_2$ du deuxième capteur (2b), les signaux $x_1$ du premier capteur (2a) produits par les fluctuations de pression étant en opposition de phase avec les signaux $x_2$ du deuxième capteur (2b) produits par les fluctuations de pression, un signal utile $y_d$ restituant le débit étant la différence entre un premier signal $y_1$ dérivé du signal du premier capteur (2a) et un deuxième signal $y_2$ dérivé du signal du deuxième capteur (2b) et les signaux parasites de même phase qui sont superposés aux signaux des capteurs en opposition de phase étant éliminés par la soustraction,
**caractérisé en ce
que** le dispositif de traitement de signal (3) est configuré de telle sorte que le débitmètre à effet vortex, en fonctionnement, met en oeuvre le procédé selon l'une des revendications 1 à 7.

9. Débitmètre à effet vortex selon la revendication 7, **caractérisé en ce que** le signal de chaque capteur est converti séparément d'analogique en numérique.

**Fig. 1**

**Fig. 2**

**Fig. 3**

**Fig. 4**

Fig. 5

Fig. 6

Fig. 7

Fig. 8

EP 2 584 320 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3908464 A1
- GB 2061505 A
- CA 892698